# EUROPÄISCHE PATENTSCHRIFT

(11) **EP 0 506 913 B1**
(45) Veröffentlichungstag und Bekanntmachung des Hinweises auf die Patenterteilung: **15.03.1995**
(21) Anmeldenummer: 91918202.2
(22) Anmeldetag: 24.10.1991
(51) Int. Cl.: G01P 1/00

(54) **VORRICHTUNG ZUM POSITIONIEREN EINES SENSORS**
SENSOR-POSITIONING DEVICE
DISPOSITIF POUR LE POSITIONNEMENT D'UN CAPTEUR

(30) Priorität: 24.10.1990 DE 4033860
(43) Veröffentlichungstag der Anmeldung: 07.10.1992
(73) Patentinhaber: LUCAS INDUSTRIES PUBLIC LIMITED COMPANY, Solihull, West Midlands B91 3TX (GB)
(72) Erfinder: JORDAN, Martin, D-5400 Koblenz (DE)
(74) Vertreter: von Hellfeld, Axel, Dr. Dipl.-Phys.
(86) Internationale Anmeldenummer: EP9102021
(87) Internationale Veröffentlichungsnummer: WO9208136

(56) Entgegenhaltungen:
- DE-A- 2 548 773
- DE-A- 3 231 821
- GB-A- 2 144 224
- IBM Technical Disclosure Bulletin, vol. 11, no. 9, February 1969, New York, US, page 1126; Rigotti: "Adjustable transducer"

## Beschreibung

Die Erfindung betrifft eine Vorrichtung zum Positionieren eines Sensors mit den Merkmalen des Oberbegriffs des Patentanspruchs 1.

Eine solche Vorrichtung ist aus dem IBM TECHNICAL DISCLOSURE BULLETIN, Bd. 11, Nr. 9, Febr. 1969, New York, US, S. 1126, bekannt. Dort wird ein Sensor mittels einer Feder in eine Richtung vorgespannt, die von dem Körper, in bezug auf den der Sensor zu justieren ist, weggerichtet ist. Ein Stellglied dient dazu, den Sensor gegen die Vorspannkraft der Feder in Richtung auf den Körper zu bewegen.

Aus der DE 36 18 528 A1 ist eine Haltevorrichtung für einen Sensor bekannt, der als Meßfühler zum Ermitteln der Drehgeschwindigkeit eines Fahrzeugrades verwendet wird und insbesondere für eine ABS-Regelung (Antiblockier-Regelung) eingesetzt wird. Dies ist auch der bevorzugte Anwendungsfall der vorliegenden Erfindung.

Bei ABS-Anlagen zum Messen des Drehverhaltens der Räder eingesetzte Sensoren arbeiten zumeist nach dem elektromagnetischen Induktionsprinzip. Ein Polrad mit Zähnen an seinem Umfang dreht sich gegenüber einem ortsfest angeordneten Sensor (Spule mit Eisenkern), wobei eine Spannung bei Bewegung des Polrades in der Spule induziert wird. Dabei besteht das Bestreben, den Abstand zwischen dem Polrad und dem Sensor möglichst gering zu halten.

Typischerweise beträgt der Luftspalt zwischen dem Sensorgehäuse und dem Polrad etwa 0,5 mm. Dies liegt schon im Bereich der Herstellungstoleranz der Bauteile sowie der Montagegenauigkeit.

Aus der eingangs genannten DE 36 18 528 A1 ist bereits ein Sensor bekannt, der genau und zuverlässig justierbar sein soll.

Aus der DE 33 32 545 A1 ist eine Haltevorrichtung für einen Signalgeber bekannt, der einfach montierbar sein soll. Dort geht es aber nicht um die Positionierung des Signalgebers in bezug auf einen von der Haltevorrichtung für den Signalgeber unabhängigen Körper.

Die vorliegende Erfindung setzt sich das Ziel, eine Haltevorrichtung zum Positionieren eines Sensors in bezug auf einen Körper zu schaffen, die eine einfache Justierung des Abstandes zwischen Sensor und Körper ermöglicht, während langer Lebensdauer mit hoher Beanspruchung (Umwelteinflüsse, Stoß- und Beschleunigungsbeanspruchung) noch betriebssicher arbeitet und trotzdem kostengünstig herstellbar ist.

Die Lösung dieser Aufgabe ist im Patentanspruch 1 gekennzeichnet. Vorteilhafte Ausgestaltungen sind in den abhängigen Ansprüchen beschrieben.

Die vorliegende Erfindung hat also (beispsielsweise im Unterschied zum Stand der Technik gemäß der DE 33 32 545) das Ziel, eine Vorrichtung zu schaffen, die den Sensor nicht nur hält, sondern ihn vor allem in bezug auf einen Körper, wie beispielsweise ein Polrad, justiert. Hierzu ist bevorzugt vorgesehen, daß bei der Montage der erfindungsgemäßen Vorrichtung zunächst mit einer Befestigungsschraube sämtliche Bauteiltoleranzen ausgeglichen werden, indem der Sensor auf den Körper (z.B. das Polrad) aufgesetzt wird.

Bevorzugt wird die erfindungsgemäße Haltevorrichtung zum Positionieren eines Drehzahlsensors in bezug auf ein Polrad, welches mit einem drehenden Fahrzeugrad verbunden ist, im Rahmen einer ABS-Regelanlage eingesetzt. Bei dieser Anwendung der Erfindung ist der Begriff "ortsfest" gleichbedeutend mit "fahrzeugfest".

Gemäß einer besonders bevorzugten Ausgestaltung der erfindungsgemäßen Haltevorrichtung ist vorgesehen, daß das Stellglied bei seiner Bewegung von der ersten zur zweiten Stellung seinen Abstand zu einer ortsfesten Abstützung ändert, insbesondere entsprechend dem gewünschten Abstand zwischen Sensor und Körper.

Das Stellglied kann bei seiner Bewegung zwischen den Stellungen eine Translations- und/oder Rotationsbewegung ausführen. Bevorzugt ist das Stellglied als verschwenkbarer Hebel ausgebildet, der eine Rotationsbewegung zwischen den beiden Stellungen ausführt.

Eine besonders kompakte (raumsparende) Bauweise der gesamten Anordnung aus Haltevorrichtung, Sensor etc. ergibt sich dann, wenn die ortsfeste Abstützung einen Stützkörper aufweist, der mit einem Befestigungsmittel ortsfest montierbar ist und in dem eine Ausnehmung ausgebildet ist, in der ein Gehäuse geführt ist, das den Sensor aufnimmt.

Eine zuverlässige Positionierung der einzelnen Bauteile zueinander ergibt sich in einer Weiterbildung des vorstehend beschriebenen Ausführungsbeispieles dadurch, daß der Stützkörper mit seiner Ausnehmung einen Käfig bildet für die Feder und daß die Feder dabei zwischen dem Stützkörper und dem Sensor-Gehäuse geführt ist.

Gemäß einer weiteren Ausgestaltung der Erfindung ist vorgesehen, daß das Stellglied in seiner zweiten Stellung das Befestigungsmittel des Stützkörpers abdeckt. Dadurch ist ein unbeabsichtigtes Lösen der Haltevorrichtung verhindert und zugleich sichergestellt, daß bei einem Austausch des Sensors anschließend die exakte Einstellung des Abstandes zwischen Sensor und Körper (Polrad) vorgenommen wird.

Nachfolgend sind Ausführungsbeispiele der Erfindung anhand der Zeichnung näher beschrieben. Es zeigt:
- Fig. 1: ein ersten Ausführungsbeispiel einer Haltevorrichtung zum Positionieren eines Sensors in bezug auf einen Körper;
- Fig. 2: eine Ansicht der Haltevorrichtung gemäß Fig.1 in Richtung des Pfeiles P₂;
- Fig. 3: ein weiteres Ausführungsbeispiel einer Haltevorrichtung zum Positionieren eines Sensors in bezug auf einen Körper;
- Fig. 4: ein anderes Ausführungsbeispiel einer Haltevorrichtung zum Positionieren eines Sensors in bezug auf einen Körper,
- Fig. 5: eine Ansicht der Haltevorrichtung gemäß Fig.4 in Richtung des Pfeiles P₂ und
- Fig. 6: eine Ansicht der Haltevorrichtung gemäß Fig.4 in Richtung das Pfeiles P₁.

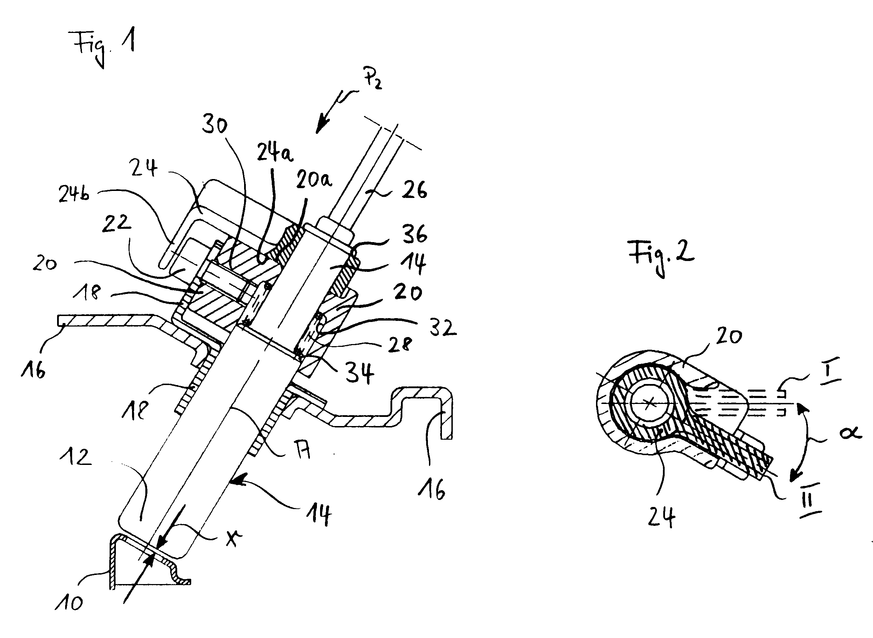

Fig.1 zeigt als Beispiel für einen Körper 10, in bezug auf den die Position eines Sensors 12 exakt auf einen Abstand "x" eingestellt werden soll, ein Polrad, das mit einem Kraftfahrzeugrad verbunden ist. Die Position des Sensors ist in den Figuren mit dem Bezugszeichen 12 angedeutet. Er befindet sich in einem Gehäuse 14 und ist hinsichtlich seiner Einzelheiten nicht näher dargestellt oder beschrieben, weil er als solches dem Fachmann bekannt ist.

Beim Ausführungsbeispiel gemäß Fig.1 ist der Sensor 12 an einem Bremsschutzschild 16 eines Fahrzeuges montiert. Zur Montage dient eine Halterung 18 aus Blech, die am Bremsschutzschild 16 befestigt ist.

Zur Abstützung und Positionierung des Sensor-Gehäuses 14 (und damit des Sensors 12) in bezug auf das Polrad 10 dient ein Stützkörper 20, der mit einem Befestigungsmittel 22 an der Halterung 18 befestigt ist. Hierzu ist das Befestigungsmittel 22 als Schraube ausgebildet und wird in eine Gewindebohrung 30 des Stützkörpers 20 eingeschraubt.

Im Stützkörper 20 ist eine zylindrische durchgehende Ausnehmung 32 mit unterschiedlichen Durchmessern ausgeformt. Das Gehäuse 14 des Sensors 12 durchsetzt diese Ausnehmung 32.

In einem ersten Bereich weist die Ausnehmung 32 einen Durchmesser auf, der exakt dem zugeordneten Durchmesser des Gehäuses 14 entspricht, so daß das Gehäuse 14 in der Ausnehmung 32 axial beweglich geführt ist. Weiterhin weist die Ausnehmung 32 einen erweiterten Bereich auf, der einen Käfig bildet für eine Feder 28, welche das Gehäuse 14 (und damit den Sensor 12) in Richtung auf das Polrad 10 vorspannt.

Das Gehäuse 14 weist zwei Anschläge 34, 36 auf. Mit dem Anschlag 34 des Gehäuses 14 steht die Feder 28 in Eingriff, welche sich andererseits am Stützkörper 20 abstützt, so daß in Fig.1 das Gehäuse 14 nach links unten vorgespannt ist.

Der Anschlag 36 des Gehäuses 14 liegt am Stellglied 24 an, so daß das Stellglied 24 in Fig.1 nach links unten gegen den Stützkörper 20 gedrückt wird.

Die aneinander liegenden Flächen 20a des Stützkörpers 20 und 24a des Stellgliedes 24 sind gegeneinander stirnverzahnt. Dies hat zur Folge, daß bei einer Rotation des Stellgliedes 24 um die Achse A der Abstand zwischen dem Stellglied 24 und dem Stützkörper 20 vergrößert bzw. verkleinert wird, je nach Drehrichtung. Hierzu ist das Stellglied 24 gemäß Fig.2 zwischen zwei Stellungen I, II bewegbar, wobei es um den Winkel α um die Achse A gedreht wird. In der Stellung II zwischen Stellglied 24 und Stützkörper 20 ist aufgrund der Verzahnung an den Flächen 20a, 24a das Gehäuse 14 in bezug auf den Körper 10 um eine Strecke "x" in Richtung nach rechts oben verschoben.

Die Montage und Justierung des Sensors gemäß den Fig.1 und 2 erfolgt deshalb wie folgt: Zunächst wird eine Einheit aus Gehäuse 14, Stellglied 24 und Stützkörper 20 zusammengefügt und mittels der Schraube 22 an der Halterung 18 befestigt. Dabei durchgreift die Schraube 22 ein Langloch in der Halterung 18, so daß die gesamte Einheit so in Fig.1 nach links unten verschoben werden kann, daß die Stirnfläche des Gehäuses 14 gegen die gegenüberliegende Fläche des Polrades 10 stößt. Der Abstand zwischen Sensor und Polrad ist in diesem Zustand gleich Null. Dabei befindet sich das Stellglied 24 in bezug auf den Stützkörper 20 in der Stellung I. Sodann wird die Schraube 22 fest angezogen und danach wird das Stellglied 24 aus der Stellung I in die Stellung II bewegt (Fig.2), wobei aufgrund der Verzahnung der Flächen 20a, 24a das Gehäuse 14 mit dem Sensor 12 in bezug auf die ortsfesten Teile 16, 18, 20 in Richtung nach rechts oben um die Strecke "x" verschoben wird. In der Stellung II ist somit die Betriebsstellung des Sensors erreicht, in welcher er einen Abstand "x" von z.B. 0,5 mm in bezug auf das Polrad 10 hat.

In der Betriebsstellung II deckt ein Arm 24b des Stellgliedes 24 die Schraube 22 ab, so daß diese nicht unbeabsichtigt verdreht werden kann. Damit ist zusätzlich auch sichergestellt, daß nach einem Wechsel des Sensors anschließend wieder die exakte Einstellung des Abstandes vorgenommen wird.

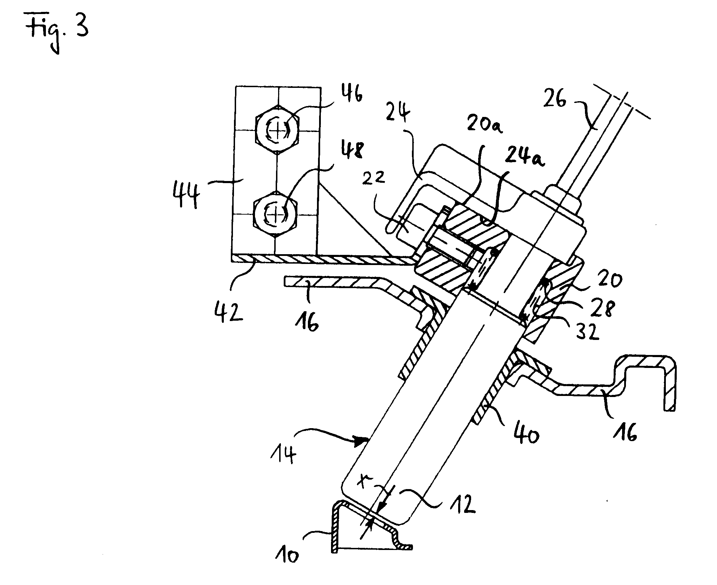

In den Figuren ist weiterhin noch ein Kabel 26 eingezeichnet, welches die Sensorsignale zu einer Auswerteelektronik leitet. Fig.3 zeigt eine Abwandlung des Ausführungsbeispieles gemäß den Fig.1 und 2. Dabei sind einander entsprechende Bauteile mit gleichen Bezugszeichen versehen.

Beim Ausführungsbeispiel gemäß Fig.3 ist der Stützkörper 20 nicht am Bremsschutzschild 16 montiert, sondern vielmehr an einem sogenannten Achsanhänger (also einem mit der Fahrzeugachse fest verbundenen Teil). Dies hat den Vorteil, daß die Übertragung von Schwingungen auf den Sensor reduziert ist. In diesem Fall ist eine Führungshülse 40 zwischen dem Sensor-Gehäuse 14 und dem Bremsschutzschild 16 angeordnet. Die Führungshülse 40 ist bevorzugt aus elastischem Material, um eine Schwingungsübertragung zu dämpfen.

Der Stützkörper 20 ist gemäß Fig.3 mit einer Schraube 22 am Achsanhänger mointert, wobei die Montage ebenfalls, wie oben beschrieben, mittels eines Langloches erfolgt. Der Achsanhänger 42 ist über eine Befestigungsplatte 44 und mittels Schrauben 46, 48 fahrzeugfest befestigt.

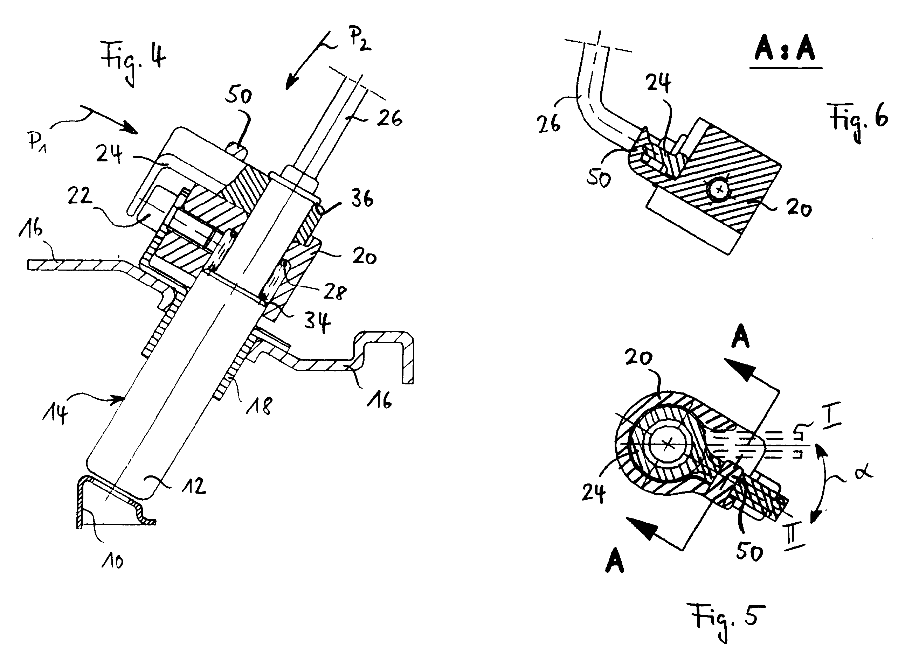

Die Fig.4 bis 6 zeigen eine Weiterbildung des Ausführungsbeispieles gemäß Fig.4, wobei die Weiterbildung in einem Haltebügel 50 besteht, der das Stellglied 24 in der Betriebsstellung II (s. Fig.5) übergreift, so daß das Stellglied in der Betriebsstellung gesichert ist.

Fig.5 zeigt eine Ansicht des Stellgliedes in Betriebsstellung II aus Richtung des Pfeiles P₂ gemäß Fig.4, während Fig.6 eine Ansicht des Stellgliedes 24, ebenfalls in Betriebsstellung II, aus Richtung des Pfeiles P₁ gemäß Fig.4 zeigt. Die Figuren machen deutlich, daß der Haltebügel 50 mit dem Stützkörper 20 verbunden ist und in der Betriebsstellung II in Rasteingriff mit dem Stellglied 24 kommt (s. Fig.6), um das Stellglied kraftschlüssig zu arretieren. Bei diesem Ausführungsbeispiel kann die Feder 28 kürzer ausgeführt sein als beim Ausführungsbeispiel gemäß Fig.1, da ein Teil der Radbeschleunigungen, die auf den Sensor übertragen werden können, nun vom Haltebügel 50 aufgefangen werden.

## Patentansprüche

1. Vorrichtung zum Positionieren eines Sensors (12) in bezug auf einen Körper (10) unter einem genau eingestellten Abstand (x) zwischen dem Sensor (12) und dem Körper (10) mit einer Feder (28), die den Sensor (12) vorspannt und mit einem zwischen zumindest zwei Stellungen (I, II) bewegbaren Stellglied (24), das bei seiner Bewegung von der ersten zur zweiten Stellung den Sensor (12) gegen die Vorspannung der Feder (28) so bewegt, daß der Sensor (12) in der zweiten Stellung des Stellgliedes (24) den Abstand (x) vom Körper (10) einnimmt, und mit einer ortsfesten Abstützung (16, 20) zum Abstützen des Sensors (12) und des Stellgliedes (24), wobei das Stellglied (24) mit einem Anschlag (36) in Eingriff steht, der mit dem Sensor (12) fest verbunden ist,
dadurch **gekennzeichnet**, daß die Feder (28) den Sensor (12) in Richtung auf den Körper (10) vorspannt, daß die Feder weiterhin das Stellglied (24) in Richtung auf die ortsfeste Abstützung (16, 20) vorspannt und daß das Stellglied (24) so ausgebildet ist, daß es den Sensor (12) bei der Bewegung in die zweite Stellung vom Körper (10) wegbewegt.

2. Vorrichtung nach Anspruch 1,
dadurch **gekennzeichnet**, daß das Stellglied (24) bei seiner Bewegung von der ersten zur zweiten Stellung seinen Abstand zu der ortsfesten Abstützung (16, 20) ändert, insbesondere entsprechend dem Abstand (x) zwischen Sensor und Körper.

3. Vorrichtung nach einem der Ansprüche 1 oder 2,
dadurch **gekennzeichnet**, daß das Stellglied (24) eine Translations- und/oder Rotationsbewegung ausführt.

4. Vorrichtung nach einem der vorhergehenden Ansprüche,
dadurch **gekennzeichnet**, daß das Stellglied (24) als verschwenkbarer Hebel ausgebildet ist.

5. Vorrichtung nach einem der Ansprüche 2 bis 4,
dadurch **gekennzeichnet**, daß die ortsfeste Abstützung (16, 20) einen Stützkörper (20) aufweist, der mit einem Befestigungsmittel (22) ortsfest montierbar ist und in dem eine Ausnehmung (32) ausgebildet ist, in der ein Gehäuse (14) geführt ist, das den Sensor (12) aufnimmt.

6. Vorrichtung nach Anspruch 5,
dadurch **gekennzeichnet**, daß der Stützkörper (20) mit seiner Ausnehmung (32) einen Käfig bildet für die Feder (28) und daß die Feder dabei zwischen dem Stützkörper (20) und dem Sensorgehäuse (14) geführt ist.

7. Vorrichtung nach einem der Ansprüche 5 oder 6,
dadurch **gekennzeichnet**, daß das Stellglied (24) in seiner zweiten Stellung (II) das Befestigungsmittel (20) des Stützkörpers (20) abdeckt.

8. Vorrichtung nach einem der vorhergehenden Ansprüche,
dadurch **gekennzeichnet**, daß der Sensor (12) ein elektromagnetischer Induktionssensor ist und daß der Körper (10) ein rotierendes Polrad ist, das mit einem Fahrzeugrad verbunden ist.

## Claims

1. A device for positioning a sensor (12) with respect to a body (10) at precisely adjusted spacing (x) between the sensor (12) and the body (10), comprising a spring (28) which biases the sensor (12), further comprising an adjusting member (24) which is movable between at least two positions (I, II) and which, when being moved from the first to the second position, moves the sensor (12) against the bias of the spring (28) such that the sensor (12) becomes located at the spacing (x) from the body (10) when the adjusting member (24) is in the second position, and further comprising a stationary support (16, 20) to support the sensor (12) and the adjusting member (24), the adjusting member (24) being in engagement with a stop (36) which is connected firmly to the sensor (12), **characterized** in that the spring (28) biases the sensor (12) in the direction of the body (10), in that the spring further biases the adjusting member (24) in the direction of the stationary support (16, 20), and in that the adjusting member (24) is of such design that it moves the sensor (12) away from the body (10) when it is being moved into the second position.

2. The device as claimed in claim 1, characterized in that the adjusting member (24), when being moved from the first to the second position, changes its distance from the stationary support (16, 20) especially so in accordance with the spacing (x) between the sensor and the body.

3. The device as claimed in one of claims 1 or 2, characterized in that the adjusting member (24) carries out translatory and/or rotational movements.

4. The device as claimed in any one of the preceding claims, characterized in that the adjusting member (24) is embodied by a pivotable lever.

5. The device as claimed in one of claims 2 to 4, characterized in that the stationary support (16, 20) comprises a support body (20) adapted to be mounted stationarily by a fastening means (22) and formed with a recess (32) in which a housing (14) is guided serving to take up the sensor (12).

6. The device as claimed in claim 5, characterized in that with its recess (32) the support body (20) presents a cage for the spring (28), and in that the spring is guided between the support body (20) and the sensor housing (14).

7. The device as claimed in one of claim 5 or 6, characterized in that the adjusting member (24), when in its second position (II), covers the fastening means (20) of the support body (20).

8. The device as claimed in any one of the preceding claims, characterized in that the sensor (12) is an electromagnetic induction sensor, and in that the body (10) is a rotating pole wheel connected to a vehicle wheel.

## Revendications

1. Dispositif pour placer un capteur (12), par rapport à un corps (10), à une distance (x), réglée exactement, entre le capteur (12) et le corps (10), comportant un ressort (28), qui soumet le capteur (12) à une précontrainte, et un organe de positionnement (24) mobile entre, au moins, deux positions (I, II), organe qui, lors de son mouvement de la première à la deuxième position, déplace le capteur (12) en sens contraire à la précontrainte du ressort (28) , de telle façon que le capteur (12), dans la deuxième position de l'organe de positionnement (24), se place à la distance (x) du corps (10), et comportant une pièce d'appui fixe (16, 20) servant à l'appui du capteur (12) et de l'organe de positionnement (24), étant entendu que l'organe de positionnement (24) est engagé sur une butée (36), qui est reliée, de façon fixe, au capteur (12),
caractérisé en ce que le ressort (28) soumet le capteur (12) à une précontrainte dans la direction du corps (10), en ce que le ressort soumet, de plus, l'organe de positionnement (24) à une précontrainte dans la direction de la pièce d'appui (16, 20) et en ce que l'organe de positionnement (24) est réalisé de façon à éloigner le capteur (12) du corps (10) au cours de son mouvement vers la deuxième position.

2. Dispositif suivant la revendication 1, caractérisé en ce que l'organe de positionnement (24), au cours de son mouvement de la première position vers la deuxième position, modifie sa distance par rapport à la pièce d'appui (16, 20), en particulier en fonction de la distance (x) entre le capteur et le corps.

3. Dispositif suivant la revendication 1 ou la revendication 2, caractérisé en ce que l'organe de positionnement (24) exécute un mouvement de translation et/ou de rotation.

4. Dispositif suivant l'une quelconque des revendications précédentes, caractérisé en ce que l'organe de positionnement (24) est réalisé sous la forme d'un levier pivotant.

5. Dispositif suivant l'une quelconque des revendications 2 à 4, caractérisé en ce que la pièce d'appui (16, 20) présente un corps d'appui (20), qui peut être monté en position fixe avec un moyen de fixation (22) et dans lequel est réalisé un évidement (32), dans lequel est introduit un boîtier (14) recevant le capteur (12).

6. Dispositif suivant la revendication 5, caractérisé en ce que le corps d'appui (20), avec son évidement (32) forme un logement pour le ressort (28) et en ce que, dans ce cas, le ressort est guidé entre le corps d'appui (20) et le boîtier (14) du capteur.

7. Dispositif suivant la revendication 5 ou la revendication 6, caractérisé en ce que l'organe de positionnement (24), dans sa deuxième position (II), recouvre le moyen de fixation (20) du corps d'appui (20).

8. Dispositif suivant l'une quelconque des revendications précédentes, caractérisé en ce que le capteur (12) est un capteur électromagnétique à induction, et en ce que le corps (10) est une roue polaire tournante, reliée à une roue de véhicule.
